# EUROPEAN PATENT SPECIFICATION

(11) **EP 4 130 855 B1**
(45) Date of publication and mention of the grant of the patent: **28.01.2026**
(21) Application number: 21782121.4
(22) Date of filing: 31.03.2021
(51) Int. Cl.: G02C 7/02, G02C 7/10, C08F 220/20, G02B 1/14, G02B 5/23, C08F 222/10, C09D 135/02, G02B 1/04

(54) **POLYMERIZABLE COMPOSITION FOR OPTICAL ARTICLE, OPTICAL ARTICLE, AND EYEGLASSES**
POLYMERISIERBARE ZUSAMMENSETZUNG FÜR EINEN OPTISCHEN ARTIKEL, OPTISCHER ARTIKEL UND BRILLE
COMPOSITION POLYMÉRISABLE POUR ARTICLE OPTIQUE, ARTICLE OPTIQUE ET LUNETTES

(30) Priority: 31.03.2020 JP 2020064621; 31.03.2020 JP 2020064807
(43) Date of publication of application: 08.02.2023
(73) Proprietor: HOYA LENS THAILAND LTD., Pathumthani 12130 (TH)
(72) Inventor: SHIMADA Takuya, Tokyo 160-8347 (JP); KOBAYASHI Kei, Tokyo 160-8347 (JP); YAMASHITA Teruo, Tokyo 160-8347 (JP); WATANABE Tsuyoshi, Tokyo 160-8347 (JP)
(74) Representative: Hoffmann Eitle
(86) International application number: PCT/JP2021/014016
(87) International publication number: WO 2021/201166

(56) References cited:
- EP-A1- 2 733 155
- EP-A1- 3 498 742
- EP-A1- 4 082 784
- WO-A1-2012/165579
- WO-A1-2013/008825
- WO-A1-2015/016313
- WO-A1-2019/189855
- WO-A1-2019/189855
- JP-A- 2005 331 718
- JP-A- 2005 331 718
- JP-A- 2006 513 276
- JP-A- 2013 023 556
- JP-A- 2019 174 776

## Description

### [Technical Field]

The present invention relates to a polymerizable composition for an optical article, an optical article and eyeglasses.

### [Background Art]

A photochromic compound is a compound having a property of developing a color under emission of light in a wavelength range having photoresponsivity and fading without light emission (photochromic properties). As a method of imparting photochromic properties to an optical article such as a spectacle lens, a method in which a coating is provided on a substrate using a polymerizable composition containing a photochromic compound and a polymerizable compound, and the coating is cured to form a cured layer (photochromic layer) having photochromic properties may be exemplified (for example, refer to PTL 1). EP2733155A1 is also cited as an example of prior art for a photochromic polymerizable composition for an optical article.

### [Citation List]

### [Patent Literature]

[PTL 1] WO 2003/011967

### [Summary of Invention]

### [Technical Problem]

Examples of properties desired for an optical article having the photochromic properties described above include a high coloring density when a color is developed by receiving light and excellent weather resistance. In addition, it is also desirable that a photochromic compound have excellent solubility in a polymerizable composition used for forming a photochromic layer.

One aspect of the present invention provides a polymerizable composition for an optical article which allows a photochromic layer having a high coloring density when a color is developed by receiving light and excellent weather resistance to be formed and in which a photochromic compound has excellent solubility.

### [Solution to Problem]

One aspect of the present invention relates to a polymerizable composition for an optical article (hereinafter also simply referred to as a "composition") including a photochromic compound, ≥ 50.0 mass%, based on a total amount of the (meth)acrylates contained in the composition, of an acyclic methacrylate (A) having a molecular weight of ≥ 500; and a bifunctional (meth)acrylate (B) selected from (i) alicyclic bifunctional (meth)acrylates and (ii) bifunctional (meth)acrylates containing one or more branch structures and containing no cyclic structure in the molecule.

The composition contains the component A and the component B together with a photochromic compound. Thereby, the photochromic layer formed by curing the composition can exhibit excellent weather resistance, and in the photochromic layer, a photochromic compound that has received light can develop a color at a high density. In addition, a photochromic compound can also exhibit excellent solubility with respect to the composition containing the component A and the component B.

### [Advantageous Effects of Invention]

According to one aspect of the present invention, it is possible to provide a polymerizable composition for an optical article which allows a photochromic layer having a high coloring density when a color is developed by receiving light and excellent weather resistance to be formed, and in which a photochromic compound has excellent solubility. In addition, according to one aspect of the present invention, it is possible to provide an optical article having a photochromic layer obtained by curing such a polymerizable composition for an optical article. In one aspect, the optical article may be a spectacle lens. According to one aspect of the present invention, it is possible to provide eyeglasses including such a spectacle lens.

### [Description of Embodiments]

### [Polymerizable Composition for Optical Article]

Hereinafter, a polymerizable composition for an optical article according to one aspect of the present invention will be described in more detail.

In the present invention and this specification, the polymerizable composition is a composition containing a polymerizable compound. The polymerizable compound is a compound having a polymerizable group. The polymerizable composition for an optical article according to one aspect of the present invention is a polymerizable composition used for producing an optical article, and may be a coating composition for an optical article, and more specifically, a coating composition for forming a photochromic layer of an optical article. The coating composition for an optical article is a composition applied to a surface to be coated such as a surface of a substrate for producing an optical article. Examples of optical articles include various lenses such as a spectacle lens and a goggles lens, a visor (cap) part of a sun visor, and a shield member of a helmet. For example, a spectacle lens produced by applying the composition to a lens substrate becomes a spectacle lens having a photochromic layer and can exhibit photochromic properties.

In the present invention and this specification, "(meth)acrylate" refers to both an acrylate and a methacrylate. An "acrylate" is a compound having one or more acryloyl groups in one molecule. A "methacrylate" is a compound having one or more methacryloyl groups in one molecule. The number of functional groups of the (meth)acrylate is the number of groups selected from the group consisting of acryloyl groups and methacryloyl groups contained in one molecule. In the present invention and this specification, a "methacrylate" contains only a methacryloyl group as a (meth)acryloyl group, and something that contains an acryloyl group and a methacryloyl group as (meth)acryloyl groups is an acrylate. The acryloyl group may be contained in the form of an acryloyloxy group, and the methacryloyl group may be contained in the form of a methacryloyloxy group. The "(meth)acryloyl group" described below refers to both an acryloyl group and a methacryloyl group, and "(meth)acryloyloxy group" refers to both an acryloyloxy group and a methacryloyloxy group. In addition, unless otherwise specified, the groups described may have substituents or may be unsubstituted. If a group has a substituent, examples of substituents include an alkyl group (for example, an alkyl group having 1 to 6 carbon atoms), a hydroxy group, an alkoxy group (for example, an alkoxy group having 1 to 6 carbon atoms), a halogen atom (for example, a fluorine atom, a chlorine atom, and a bromine atom), a cyano group, an amino group, a nitro group, an acyl group, and a carboxyl group. In addition, for a group having a substituent, the "number of carbon atoms" is the number of carbon atoms of a part containing no substituents.

### <Polymerizable Compound>

The composition contains at least a component A and a component B as polymerizable compounds. Hereinafter, the component A and the component B will be described.

### (Component A)

The component A is an acyclic methacrylate having a molecular weight of 500 or more. In the present invention and this specification, "acyclic" means that a compound does not include a cyclic structure. The acyclic methacrylate is a mono- or higher-functional methacrylate that does not include a cyclic structure. It is inferred that the component A can contribute to an ability of a photochromic layer formed from the composition to exhibit excellent weather resistance.

The component A may be a monofunctional or bi-or higher-functional methacrylate, and is preferably a bifunctional or trifunctional methacrylate, and more preferably a bifunctional methacrylate. Examples of components A include polyalkylene glycol dimethacrylate. The polyalkylene glycol dimethacrylate may be represented by the following Formula 1: 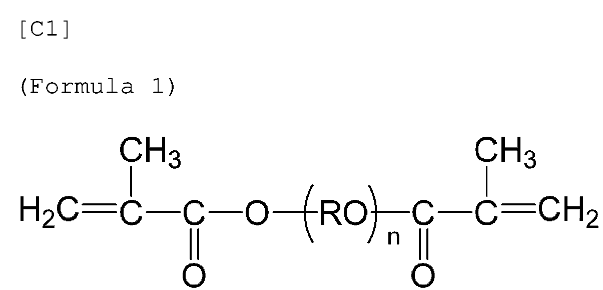 where R represents an alkylene group, and n represents the number of repetitions of alkoxy groups represented by RO, and is 2 or more. Examples of alkylene groups represented by R include an ethylene group, a propylene group, and a tetramethylene group. n is 2 or more, and may be, for example, 30 or less, 25 or less or 20 or less. Specific examples of polyalkylene glycol dimethacrylate include polyethylene glycol dimethacrylate, polypropylene glycol dimethacrylate, and polytetramethylene glycol dimethacrylate.

The molecular weight of the component A is 500 or more. It is inferred that the inclusion of an acyclic bifunctional methacrylate (a component A) having a molecular weight of 500 or more together with a component B, which will be described below in detail, can contribute to an ability of a photochromic compound that has received light to develop a color at a high density in a photochromic layer formed from the composition. Here, in the present invention and this specification, for the molecular weight of the polymer, a theoretical molecular weight calculated from the structural formula determined by structural analysis of the compound or the raw material preparation ratio during production is used. The molecular weight of the component A is 500 or more, preferably 510 or more, more preferably 520 or more, preferably 550 or more, more preferably 570 or more, still more preferably 600 or more, still more preferably 630 or more, and yet more preferably 650 or more. The molecular weight of the component A is preferably, for example, 2000 or less, 1500 or less, 1200 or less, 1000 or less, or 800 or less, in order to increase the hardness of the photochromic layer.

### (Component B)

The component B is a bifunctional (meth)acrylate containing a structure selected from the group consisting of a cyclic structure and a branch structure. It is inferred that the inclusion of the component B together with the component A in the composition can contribute to an ability of a photochromic compound that has received light to develop a color at a high density in a photochromic layer formed from the composition. In addition, it is thought that the component B can contribute to improving the solubility of the photochromic compound in the composition. The component B contains one or more cyclic structures and does not contain a branch structure in one molecule in one aspect, contains one or more branch structures and does not contain a cyclic structure in one molecule in another aspect, and contains one or more cyclic structures and one or more branch structures in one molecule in another aspect. The number of structures selected from the group consisting of cyclic structures and branch structures contained in one molecule is one or more, and may be, for example, one, two, or three, and is preferably one or two, and more preferably one. Regarding the branch structure, when the component B has a methacryloyl group, the branch structure contained in the methacryloyl group is not considered.

In one aspect, the component B containing one or more cyclic structures may be an alicyclic bifunctional (meth)acrylate. The alicyclic bifunctional (meth)acrylate may be, for example, a compound having a structure represented by R¹-(L¹)n1-Q-(L²)n2-R². Here, Q represents a divalent alicyclic group, R¹ and R² each independently represent a (meth)acryloyl group or a (meth)acryloyloxy group, L¹ and L² each independently represent a linking group, and n1 and n2 each independently represent 0 or 1. The divalent alicyclic group represented by Q is preferably an alicyclic hydrocarbon group having 3 to 20 carbon atoms, and examples thereof include a cyclopentylene group, a cyclohexylene group, a cycloheptylene group, a cyclooctylene group, a tricyclodecane group, and an adamantylene group. Examples of linking groups represented by L¹ and L² include an alkylene group. The alkylene group may be, for example, an alkylene group having 1 to 6 carbon atoms.

Specific examples of alicyclic bifunctional (meth)acrylates include cyclohexanedimethanol di(meth)acrylate, ethoxylated cyclohexanedimethanol di(meth)acrylate, propoxylated cyclohexanedimethanol di(meth)acrylate, ethoxylated propoxylated cyclohexanedimethanol di(meth)acrylate, tricyclodecanedimethanol di(meth)acrylate, ethoxylated tricyclodecanedimethanol di(meth)acrylate, propoxylated tricyclodecanedimethanol di(meth)acrylate, and ethoxylated propoxylated tricyclodecanedimethanol di(meth)acrylate.

The component B containing one or more branch structures may be a bifunctional (meth)acrylate containing a branched alkylene group in one aspect. The number of carbon atoms of the branched alkylene group may be 1 or more, 2 or more, 3 or more or 4 or more. In addition, the number of carbon atoms of the branched alkylene group may be 10 or less, 9 or less, 8 or less, 7 or less, 6 or less or 5 or less. In one aspect, the branched alkylene group may include a quaternary carbon atom (that is, a carbon atom bonded to four carbon atoms). Specific examples of the component B containing one or more branch structures include neopentyl glycol di(meth)acrylate, ethoxylated neopentyl glycol di(meth)acrylate, and propoxylated neopentyl glycol di(meth)acrylate.

The molecular weight of the component B is not particularly limited, and may be, for example, in a range of 200 to 400 in one aspect. The component B may contain, as a (meth)acryloyl group, only an acryloyl group, only a methacryloyl group, or an acryloyl group and a methacryloyl group.

The content of the component A based on a total amount (100 mass%) of the (meth)acrylates contained in the composition is 50.0 mass% or more, more preferably 60.0 mass% or more, and still more preferably 70.0 mass% or more. In addition, the content of the component A may be, for example, 95.0 mass% or less or 90.0 mass% or less. The above composition may contain only one type of component A or two or more types of component A. When two or more types of component A are contained, the above content is a total content of these two or more types of component A. This similarly applies to the content of other components such as the component B. Here, in the present invention and this specification, a component corresponding to both the component A and the component B may be regarded as the component A. The component A is the most abundant component among the (meth)acrylates contained in the composition. On the other hand, the content of the component B based on a total amount (100 mass%) of the (meth)acrylates contained in the composition may be 1.0 mass% or more, and is preferably 5.0 mass% or more and more preferably 10.0 mass% or more. In addition, the content of the component B may be, for example, 30.0 mass% or less, 25.0 mass% or less or 20.0 mass% or less. The composition may or may not contain (meth)acrylates other than the components A and B. When the composition contains (meth)acrylates other than the components A and B, the content thereof based on a total amount (100 mass%) of the (meth)acrylates contained in the composition is preferably 10.0 mass% or less and more preferably 5.0 mass% or less. In one aspect, the composition may contain only the component A and the component B as (meth)acrylates. In addition, the composition may or may not contain a polymerizable compound other than the (meth)acrylates. For example, the composition may contain a total content of 80.0 to 99.9 mass% of (meth)acrylates based on a total amount (100 mass%) of the composition. In the present invention and this specification, regarding the content, the "total amount of the composition" is a total amount of all components excluding a solvent in the composition containing the solvent. The composition may or may not contain a solvent. When the composition contains a solvent, any solvent in an arbitrary amount can be used as a usable solvent as long as it does not inhibit progress of the polymerization reaction of the polymerizable composition.

### <Photochromic Compound>

The composition contains a photochromic compound together with various components described above. Regarding the photochromic compound contained in the composition, known compounds exhibiting photochromic properties can be used. The photochromic compound can exhibit photochromic properties with respect to, for example, ultraviolet rays. Examples of photochromic compounds include compounds having a known framework exhibiting photochromic properties such as fulgimide compounds, spirooxazine compounds, chromene compounds, and indeno-fused naphthopyran compounds. The photochromic compounds may be used alone or two or more thereof may be used in combination. The content of the photochromic compounds of the composition may be, for example, about 0.1 to 15.0 mass%, based on a total amount of 100 mass% of the composition, but is not limited to this range.

### <Other Components>

The composition may contain one or more types of various additives that can be generally added to the polymerizable composition in an arbitrary content in addition to the various components described above. Examples of additives that can be added to the composition include a polymerization initiator that allows a polymerization reaction to proceed.

For example, regarding the polymerization initiator, a known polymerization initiator can be used, and a radical polymerization initiator is preferable, and it is more preferable that only a radical polymerization initiator be contained as a polymerization initiator. In addition, regarding the polymerization initiator, a photopolymerization initiator or a thermal polymerization initiator can be used, and in order for a polymerization reaction to proceed in a short time, a photopolymerization initiator is preferable. Examples of photoradical polymerization initiators include benzoin ketals such as 2,2-dimethoxy-1,2-diphenylethane-1-one; α-hydroxyketones such as 1-hydroxycyclohexylphenyl ketone, 2-hydroxy-2-methyl-1-phenylpropan-1-one, and 1-[4-(2-hydroxyethoxy)phenyl]-2-hydroxy-2-methyl-1-propane-1-one; α-aminoketones such as 2-benzyl-2-dimethylamino-1-(4-morpholinophenyl)-butane-1-one, and 1,2-methyl-1-[4-(methylthio)phenyl]-2-morpholinopropan-1-one; oxime esters such as 1-[(4-phenylthio)phenyl]-1,2-octadione-2-(benzoyl)oxime; phosphine oxides such as bis(2,4,6-trimethylbenzoyl)phenylphosphine oxide, bis(2,6-dimethoxybenzoyl)-2,4,4-trimethylpentyl phosphine oxide, and 2,4,6-trimethylbenzoyldiphenylphosphine oxide; 2,4,5-triarylimidazole dimers such as 2-(o-chlorophenyl)-4,5-diphenylimidazole dimer, 2-(o-chlorophenyl)-4,5-di(methoxyphenyl)imidazole dimer, 2-(o-fluorophenyl)-4,5-diphenylimidazole dimer, 2-(o-methoxyphenyl)-4,5-diphenylimidazole dimer, and 2-(p-methoxyphenyl)-4,5-diphenylimidazole dimer; benzophenone compounds such as benzophenone, N,N'-tetramethyl-4,4'-diaminobenzophenone, N,N'-tetraethyl-4,4'-diaminobenzophenone, and 4-methoxy-4'-dimethylaminobenzophenone; quinone compounds such as 2-ethylanthraquinone, phenanthrenequinone, 2-tert-butylanthraquinone, octamethylanthraquinone, 1,2-benzanthraquinone, 2,3-benzanthraquinone, 2-phenylanthraquinone, 2,3-diphenylanthraquinone, 1-chloroanthraquinone, 2-methylanthraquinone, 1,4-naphthoquinone, 9,10-phenanthraquinone, 2-methyl-1,4-naphthoquinone, and 2,3-dimethylanthraquinone; benzoin ethers such as benzoin methyl ether, benzoin ethyl ether, and benzoin phenyl ether; benzoin compounds such as benzoin, methyl benzoin, and ethyl benzoin; benzyl compounds such as benzyl dimethyl ketal; acridine compounds such as 9-phenylacridine, 1,7-bis(9,9'-acridinyl heptane); and N-phenylglycine, and coumarin. In addition, in the 2,4,5-triarylimidazole dimer, substituents on the aryl groups of two triarylimidazole moieties may provide the same symmetric compound, or may provide different asymmetric compounds. In addition, a thioxanthone compound and a tertiary amine may be combined such as a combination of diethylthioxanthone and dimethylaminobenzoic acid. Among these, in consideration of curability, transparency and heat resistance, α-hydroxyketone and phosphine oxide are preferable. The content of the polymerization initiator may be, for example, in a range of 0.1 to 5.0 mass% based on a total amount of 100 mass% of the composition.

Known additives that can be generally added to the composition containing a photochromic compound, for example, additives such as a surfactant, an antioxidant, a radical scavenger, a light stabilizer, a UV absorbing agent, an anti-coloring agent, an antistatic agent, a fluorescent dye, a dye, a pigment, a fragrance, a plasticizer, and a silane coupling agent in an arbitrary amount can be additionally added to the composition. Known compounds can be used as these additives.

The composition can be prepared by simultaneously or sequentially mixing in the various components described above in any order.

### [Optical Article]

One aspect of the present invention relates to an optical article including a substrate and a photochromic layer obtained by curing the composition.

Hereinafter, the optical article will be described in more detail.

### <Substrate>

The optical article can have a photochromic layer on a substrate selected according to the type of the optical article. As an example of the substrate, a spectacle lens substrate may be a plastic lens substrate or a glass lens substrate. The glass lens substrate may be, for example, a lens substrate made of inorganic glass. The lens substrate is preferably a plastic lens substrate because it is lightweight, hard to break, and easy to handle. Examples of plastic lens substrates include styrene resins such as (meth)acrylic resins, allyl carbonate resins such as polycarbonate resins, allyl resins, and diethylene glycol bis(allyl carbonate) resins (CR-39), vinyl resins, polyester resins, polyether resins, urethane resins obtained by reacting an isocyanate compound with a hydroxy compound such as diethylene glycol, thiourethane resins obtained by reacting an isocyanate compound with a polythiol compound, and a cured product (generally referred to as a transparent resin) obtained by curing a curable composition containing a (thio)epoxy compound having one or more disulfide bonds in the molecule. As the lens substrate, an undyed lens (colorless lens) may be used or a dyed lens (colored lens) may be used. The refractive index of the lens substrate may be, for example, about 1.60 to 1.75. However, the refractive index of the lens substrate is not limited to the above range, and may be within the above range, or may be above or below outside the above range. In the present invention and this specification, the refractive index is a refractive index for light having a wavelength of 500 nm. In addition, the lens substrate may be a lens having refractive power (so-called prescription lens) or a lens having no refractive power (so-called no-prescription lens). In order to clean the surface of the substrate or the like, one or more known pretreatments such as an alkaline treatment and a UV ozone treatment can be arbitrarily performed on the surface of the substrate before one or more layers are formed thereon.

The spectacle lens may include various lenses such as a single focus lens, a multifocal lens, and a progressive power lens. The type of the lens is determined by the surface shape of both sides of the lens substrate. In addition, the surface of the lens substrate may be a convex surface, a concave surface, or a flat surface. In a general lens substrate and spectacle lens, the object-side surface is a convex surface and the eyeball-side surface is a concave surface. However, the present invention is not limited thereto. The photochromic layer may be generally provided on the object-side surface of the lens substrate, or may be provided on the eyeball-side surface.

### <Photochromic Layer>

The photochromic layer of the optical article is a cured layer obtained by curing the composition. The photochromic layer can be formed by directly applying the composition onto the surface of the substrate or indirectly applying the composition onto the surface of the substrate via one or more other layers, and performing a curing treatment on the applied composition. As the coating method, known coating methods such as a spin coating method and a dip coating method can be used, and a spin coating method is preferable in consideration of coating uniformity. The curing treatment may be light emission and/or heat treatment, and light emission is preferable in order for the curing reaction to proceed in a short time. Curing treatment conditions may be determined according to the types of various components (polymerizable compounds, polymerization initiators and the like described above) contained in the composition, and the formulation of the composition. The thickness of the photochromic layer formed in this manner is, for example, preferably in a range of 5 to 80 µm, and more preferably in a range of 20 to 60 µm.

### <Primer Layer>

Examples of other layers that can be positioned between the substrate and the photochromic layer include a primer layer for improving the adhesion between the substrate and the photochromic layer. The primer layer may be a cured layer obtained by curing a polymerizable composition for forming a primer layer (hereinafter also referred to as a "composition for a primer layer").

In one aspect, the composition for a primer layer may contain a polyisocyanate, a hydroxy group-containing polymerizable compound, and a polymerizable compound having a viscosity of 100 cP or less and selected from the group consisting of (meth)acrylates and vinyl ether. In an optical article having a photochromic layer on a substrate, it is preferable to provide a primer layer between the substrate and the photochromic layer in order to improve the adhesion between the substrate and the photochromic layer. Therefore, the inventors have studied a primer layer provided between the substrate and the photochromic layer, and found that a decrease in optical homogeneity due to the primer layer could occur. In addition, the inventors conducted further extensive studies, and as a result, newly found that, when the composition for a primer layer contains the above three types of components, it is possible to reduce the occurrence of optical defects caused by the primer layer, and thereby it is possible to provide an optical article having excellent optical homogeneity. In addition, the primer layer formed from such a composition for a primer layer is also preferable because it has excellent adhesion to the photochromic layer formed from the polymerizable composition for an optical article described above. Hereinafter, various components contained in the composition for a primer layer will be described in more detail.

### (Polyisocyanate)

The composition for a primer layer contains a polyisocyanate. The polyisocyanate is a compound having two or more isocyanate groups in one molecule. The number of isocyanate groups contained in one molecule of the polyisocyanate is 2 or more, and preferably 3 or more. In addition, the number of isocyanate groups contained in one molecule of the polyisocyanate may be, for example, 6 or less, 5 or less or 4 or less. The molecular weight of the polyisocyanate may be, for example, in a range of 100 to 500, but is not limited to this range. Specific examples of polyisocyanates include aromatic diisocyanates such as xylylene diisocyanate, phenylene diisocyanate, tolylene diisocyanate, diphenylmethane diisocyanate, and naphthalene diisocyanate, and aliphatic or alicyclic diisocyanates such as hexamethylene diisocyanate, lysine diisocyanate, cyclohexane diisocyanate, isophorone diisocyanate, 4,4'-dicyclohexylmethane diisocyanate, 1,3-bisisocyanatomethylcyclohexane, and tetramethylxylylene diisocyanate. In addition, allophanate products, adduct products, biuret products, isocyanurate products and the like of the polyisocyanates exemplified above may be exemplified. Examples of commercial polyisocyanate products include Coronate HX, Coronate HXR, Coronate HXLV, Coronate HK, Coronate 2715, Coronate HL, Coronate L, Coronate 2037, HDI, TDI, MDI (commercially available from Tosoh Corporation), Takenate 500, Takenate 600, Duranate 24A-100, TPA-100, TKA-100, P301-75E, and Takenate D-110N, D-120N, D-127N, D-140N, D-160N, D15N, D-170N, D-170HN, D-172N, D-177N, D-178N, D-101E (commercially available from Mitsui Chemicals, Inc.).

### (Hydroxy Group-Containing Polymerizable Compound)

The composition for a primer layer contains a hydroxy group-containing polymerizable compound. The number of hydroxy groups contained in one molecule of the hydroxy group-containing polymerizable compound is 1 or more and preferably 2 or more. In addition, the number of hydroxy groups contained in one molecule of the component B is preferably 4 or less and more preferably 3 or less. A urethane bond can be formed by reacting an isocyanate group of a polyisocyanate with a hydroxy group of a hydroxy group-containing polymerizable compound. The inventors speculate that this urethane bond contributes to an ability of the primer layer to function as a layer for improving adhesion.

The hydroxy group-containing polymerizable compound may have one or more polymerizable groups in one molecule and preferably has two or more polymerizable groups. The hydroxy group-containing polymerizable compound may be a (meth)acrylate in one aspect.

When the hydroxy group-containing polymerizable compound is a (meth)acrylate, the number of functional groups of the (meth)acrylate is 1 or more (that is, mono-or higher-functional), and preferably 2 or more. In addition, the number of functional groups is preferably 3 or less. The component B may contain, as a (meth)acryloyl group, only an acryloyl group, only a methacryloyl group, or an acryloyl group and a methacryloyl group. In one aspect, the hydroxy group-containing polymerizable compound preferably contains only an acryloyl group as a (meth)acryloyl group. The molecular weight of the hydroxy group-containing polymerizable compound may be, for example, in a range of 300 to 400, but is not limited to this range. Specific examples of hydroxy group-containing polymerizable compounds include 2-hydroxyethyl (meth)acrylate, hydroxypropyl (meth)acrylate, 4-hydroxybutyl (meth)acrylate, 1,4-cyclohexanedimethanol monoacrylate, 2-hydroxy-1-acryloxy-3-methadoryloxypropane, 2-hydroxy-1-3dimethacryloxypropane, pentaerythritol tetraacrylate, 2-hydroxy-3-phenoxypropyl acrylate, monoacryloxyethyl hexahydrophthalate, 2-acryloyloxyethyl phthalate, and 2-(acryloxyoxy)ethyl 2-hydroxyethyl phthalate. In addition, in one aspect, the hydroxy group-containing polymerizable compound may have an amide group. Specific examples of hydroxy group-containing polymerizable compounds having an amide group include, for example, N-(2-hydroxyethyl)acrylamide. In addition, the hydroxy group-containing polymerizable compound may have an epoxy ester structure in one aspect. The epoxy ester structure is a structure generated by a reaction between an epoxy group and a carboxyl group, and may be represented by "-CH(OH)-CH₂-O-C(=O)-." Examples of commercial products of hydroxy group-containing polymerizable compounds having an epoxy ester structure include Epoxy Ester 40EM (commercially available from Kyoeisha Chemical Co., Ltd.), Epoxy Ester 70PA (commercially available from Kyoeisha Chemical Co., Ltd.), Epoxy Ester 80MFA (commercially available from Kyoeisha Chemical Co., Ltd.), Epoxy Ester 200PA (commercially available from Kyoeisha Chemical Co., Ltd.), Epoxy Ester 3002M (N) (commercially available from Kyoeisha Chemical Co., Ltd.), Epoxy Ester 3002A (N) (commercially available from Kyoeisha Chemical Co., Ltd.), Epoxy Ester 3000MK (commercially available from Kyoeisha Chemical Co., Ltd.), and Epoxy Ester 3000A (commercially available from Kyoeisha Chemical Co., Ltd.).

### (Polymerizable Compound Having Viscosity of 100 cP or Less and Selected from the Group Consisting of (Meth)Acrylates and Vinyl Ether)

The composition for a primer layer has a viscosity of 100 cP (centipoises) or less and contains a polymerizable compound selected from the group consisting of (meth)acrylates and vinyl ether. The inventors speculate that the inclusion of such a low-viscosity polymerizable compound contributes to reducing the occurrence of optical defects in a primer layer formed from a polymerizable composition for forming a primer layer containing a polyisocyanate and a hydroxy group-containing polymerizable compound. In the present invention and this specification, the "viscosity" is a value measured by a vibration type viscometer in the atmosphere at a temperature of 25°C. The viscosity of the polymerizable compound is 100 cP or less, preferably 70 cP or less and more preferably 50 cP or less. In addition, the viscosity of the polymerizable compound may be, for example, 5 cP or more or 10 cP or more. The (meth)acrylate which is one aspect of the polymerizable compound may be monofunctional to trifunctional, and preferably monofunctional to bifunctional. In addition, the (meth)acrylate which is one aspect of the polymerizable compound may contain an aryl group (for example, a phenyl group), an amide group and the like. In the present invention and this specification, the "vinyl ether" is a compound having one or more vinyl groups and one or more ether bonds in one molecule, and preferably has two or more vinyl groups in one molecule and more preferably 2 to 4 vinyl groups. In addition, the number of ether bonds contained in the vinyl ether in one molecule is preferably 2 to 4. The molecular weight of the polymerizable compound may be, for example, in a range of 150 to 250, but is not limited to this range. Specific examples of polymerizable compounds include 2-phenoxyethyl(meth)acrylate, acrylamide, methoxypolyethylene glycol(meth)acrylate, phenoxy polyethylene glycol(meth)acrylate, stearyl (meth)acrylate, 1,10-decanediol di(meth)acrylate, 1,6-hexanediol di(meth)acrylate, 1,9-nonane diol di(meth)acrylate, dipropylene glycol di(meth)acrylate, tripropylene glycol di(meth)acrylate, polypropylene glycol di(meth)acrylate, phenoxyethyl (meth)acrylate, ethylene glycol di(meth)acrylate, diethylene glycol di(meth)acrylate, triethylene glycol di(meth)acrylate, tricyclodecanedimethanol di(meth)acrylate, ethoxylated polypropylene glycol di(meth)acrylate, trimethylolpropane tri(meth)acrylate, ethyl (meth)acrylate, butyl (meth)acrylate, isobutyl (meth)acrylate, tert-butyl (meth)acrylate, 2-ethylhexyl (meth)acrylate, isodecyl (meth)acrylate, dodecyl (meth)acrylate, tridecyl (meth)acrylate, diethylene glycol butyl ether (meth)acrylate, cyclohexyl (meth)acrylate, tetrahydrofurfuryl (meth)acrylate, benzyl (meth)acrylate, 2-phenoxyethyl(meth)acrylate, isobornyl (meth)acrylate, 2-(dimethylamino)ethyl (meth)acrylate, 2-(diethylamino)ethyl (meth)acrylate, glycidyl (meth)acrylate, ethylene glycol di(meth)acrylate, diethylene glycol di(meth)acrylate, triethylene glycol di(meth)acrylate, polyethylene glycol di(meth)acrylate, tetramethylene glycol di(meth)acrylate, neopentyl glycol di(meth)acrylate, hexanediol di(meth)acrylate, nonamethylene glycol di(meth)acrylate, isoamyl (meth)acrylate, ethylene glycol monovinyl ether, tetramethylene glycol monovinyl ether, diethylene glycol monovinyl ether, 2-ethylhexyl vinyl ether, 2-propenoic acid, 2-[2-(ethenyloxy)ethoxy]ethyl ester, and 2-(2-ethenoxyethoxy)ethyl 2-methylprop-2-enoate.

In the composition for a primer layer, the content of the polymerizable compound having a viscosity of 100 cP or less and selected from the group consisting of (meth)acrylates and vinyl ether based on a total amount of 100 mass% of the polymerizable compound, the polyisocyanate, and the hydroxy group-containing polymerizable compound is preferably 30.0 mass% or more and more preferably 40.0 mass% or more. The content of the polymerizable compound having a viscosity of 100 cP or less and selected from the group consisting of (meth)acrylates and vinyl ether based on a total amount of 100 mass% of the polymerizable compound, the polyisocyanate and the hydroxy group-containing polymerizable compound may be, for example, 90.0 mass% or less, 80.0 mass% or less or 70.0 mass% or less. In one aspect, the polymerizable compound having a viscosity of 100 cP or less and selected from the group consisting of (meth)acrylates and vinyl ether is preferably the most abundant component in the composition for a primer layer among the polymerizable compound, the polyisocyanate and the hydroxy group-containing polymerizable compound.

In the composition for a primer layer, the content of the polyisocyanate based on a total amount of 100 mass% of the polyisocyanate, the hydroxy group-containing polymerizable compound and the polymerizable compound having a viscosity of 100 cP or less and selected from the group consisting of (meth)acrylates and vinyl ether is preferably 70.0 mass% or less, more preferably 60.0 mass% or less, and still more preferably 50.0 mass% or less. The content of the polyisocyanate based on a total amount of 100 mass% of the polyisocyanate, the hydroxy group-containing polymerizable compound and the polymerizable compound having a viscosity of 100 cP or less and selected from the group consisting of (meth)acrylates and vinyl ether may be, for example, 10.0 mass% or more, 20.0 mass% or more or 30.0 mass% or more.

In the polymerizable composition for forming a primer layer, the content of the hydroxy group-containing polymerizable compound based on a total amount of 100 mass% of the polyisocyanate, the hydroxy group-containing polymerizable compound and the polymerizable compound having a viscosity of 100 cP or less and selected from the group consisting of (meth)acrylates and vinyl ether is preferably 3.0 mass% or more, more preferably 5.0 mass% or more, and still more preferably 7.0 mass% or more. The content of the hydroxy group-containing polymerizable compound based on a total amount of 100 mass% of the polyisocyanate, the hydroxy group-containing polymerizable compound and the polymerizable compound having a viscosity of 100 cP or less and selected from the group consisting of (meth)acrylates and vinyl ether may be, for example, 30.0 mass% or less or 20.0 mass% or less.

The composition for a primer layer may further contain a polymerization initiator. The composition for a primer layer may contain, for example, a polymerization initiator in a content range of 0.01 to 3.0 mass% based on a total amount of 100 mass% of the polyisocyanate, the hydroxy group-containing polymerizable compound and the polymerizable compound having a viscosity of 100 cP or less and selected from the group consisting of (meth)acrylates and vinyl ether.

Regarding the polymerization initiator, a known polymerization initiator can be used, and a radical polymerization initiator is preferable, and it is more preferable that only a radical polymerization initiator be contained as a polymerization initiator. In addition, regarding the polymerization initiator, a photopolymerization initiator or a thermal polymerization initiator can be used, and in order for a polymerization reaction to proceed in a short time, a photopolymerization initiator is preferable. For specific examples of photoradical polymerization initiators, the above description regarding the polymerization initiator that may be contained in the polymerizable composition for an optical article can be referred to.

The composition for a primer layer may or may not contain a solvent. When the composition contains a solvent, any solvent can be used as a usable solvent as long as it does not inhibit progress of the polymerization reaction of the polymerizable composition. When the composition contains a solvent, the content of the solvent based on a total amount of 100 mass% of the polyisocyanate, the hydroxy group-containing polymerizable compound and the polymerizable compound having a viscosity of 100 cP or less and selected from the group consisting of (meth)acrylates and vinyl ether is preferably 10.0 mass% or less, more preferably 5.0 mass% or less, and still more preferably 3.0 mass% or less.

The composition for a primer layer may further contain known additives that can be generally added to the composition for forming a primer layer in an arbitrary amount. Known compounds can be used as additives. Based on a total amount of 100 mass% of the composition (excluding the polymerization initiator), the composition for a primer layer may contain a total amount of 80.0 mass% or more, 85.0 mass% or more, 90.0 mass% or more or 95.0 mass% or more of the polyisocyanate, the hydroxy group-containing polymerizable compound and the polymerizable compound having a viscosity of 100 cP or less and selected from the group consisting of (meth)acrylates and vinyl ether. In addition, in the composition for a primer layer, based on a total amount of 100 mass% of the composition (excluding the polymerization initiator), a total content of the polyisocyanate, the hydroxy group-containing polymerizable compound and the polymerizable compound having a viscosity of 100 cP or less and selected from the group consisting of (meth)acrylates and vinyl ether may be, for example, 100 mass%, 100 mass% or less, less than 100 mass%, 99.0 mass% or less or 98.0 mass% or less.

The composition for a primer layer can be prepared by simultaneously or sequentially mixing in the various components described above in any order.

When the composition for a primer layer is applied to a substrate and a curing treatment is performed on the applied composition, a primer layer which is a cured layer obtained by curing the composition for a primer layer can be formed on the substrate. As the coating method, known coating methods such as a spin coating method and a dip coating method can be used, and a spin coating method is preferable in consideration of coating uniformity. The curing treatment may be light emission and/or heat treatment, and light emission is preferable in order for the curing reaction to proceed in a short time. Curing treatment conditions may be determined according to the types of various components contained in the composition for a primer layer and the formulation of the composition for a primer layer. After the curing treatment, as necessary, an annealing treatment (heat treatment) can be performed. The annealing treatment can be performed, for example, in a heat treatment furnace at an atmospheric temperature of about 90 to 130°C.

The thickness of the primer layer may be, for example, 3 µm or more, and is preferably 5 µm or more. In addition, the thickness of the primer layer may be, for example, 15 µm or less, and is preferably 10 µm or less.

The optical article having the photochromic layer may or may not have one or more functional layers in addition to the photochromic layer. As an example of the functional layer, a primer layer may be exemplified, and details thereof are as described above. In addition, as an example of the functional layer, various functional layers that can be contained in the optical article such as a protective layer for improving the durability of an optical article, a cured layer generally called a hard coat layer, an anti-reflective layer, a water repellent or hydrophilic antifouling layer, and an antifogging layer may be exemplified.

### <Protective Layer>

The protective layer can be formed on the photochromic layer as a cured layer obtained by curing, for example, a polymerizable composition for forming a protective layer (hereinafter also referred to as a "composition for a protective layer"). It is preferable to provide the protective layer on the photochromic layer in order to improve the durability of the optical article having the photochromic layer. In consideration of this, it is desirable that the protective layer have a high hardness. In addition, it is also desirable that the protective layer have excellent solvent resistance. In a process of producing an optical article, generally, after a layer is formed, a wiping treatment with a solvent is performed in order to clean the surface of the formed layer. This is because, if the protective layer is damaged in the wiping treatment, this causes the occurrence of fogging and optical defects in the optical article. As a polymerizable composition that allows a protective layer preferable in consideration of hardness and solvent resistance to be formed, a polymerizable composition containing one or more (meth)acrylates and containing 70.0 mass% or more of an alicyclic bifunctional (meth)acrylate based on a total amount of the (meth)acrylates may be exemplified.

For details of the alicyclic bifunctional (meth)acrylate contained in the composition for a protective layer, the above description regarding the alicyclic bifunctional (meth)acrylate as an example of the component B of the polymerizable composition for an optical article can be referred to. The composition for a protective layer contains 70.0 mass% or more of an alicyclic bifunctional (meth)acrylate based on a total amount of the (meth)acrylates. The inventors consider this is to be the reason why the protective layer formed from the composition for a protective layer can exhibit a high hardness and excellent solvent resistance. In order to make it possible to provide a protective layer that can exhibit a higher hardness and better solvent resistance on the optical article, in the composition for a protective layer, based on a total amount of the (meth)acrylates, the content of the alicyclic bifunctional (meth)acrylate is preferably 75.0 mass% or more, more preferably 80.0 mass% or more, still more preferably 85.0 mass% or more, yet more preferably 90.0 mass% or more, and yet more preferably 95.0 mass% or more. In one aspect, in the composition for a protective layer, a total amount of the (meth)acrylates may be an amount of the alicyclic bifunctional (meth)acrylate.

In one aspect, the composition for a protective layer may contain, as a (meth)acrylate, one or more types of other (meth)acrylates in addition to the alicyclic bifunctional (meth)acrylate and in another aspect, the composition may contain, as a (meth)acrylate, only an alicyclic bifunctional (meth)acrylate. In the case of the former form, other (meth)acrylates contained together with the alicyclic bifunctional (meth)acrylate are not particularly limited, and one or two or more types of various (meth)acrylates can be used. Examples of other (meth)acrylates include monofunctional, bifunctional, trifunctional, tetrafunctional and pentafunctional (meth)acrylates, which may be acyclic or cyclic. The (meth)acrylate including a cyclic structure may have an alicyclic structure as a cyclic structure or may have another cyclic structure. For the alicyclic structure, the above description regarding the alicyclic bifunctional (meth)acrylate can be referred to. In the composition for a protective layer, the content of other (meth)acrylates based on a total amount of the (meth)acrylates may be 30.0 mass% or less, 25.0 mass% or less, 20.0 mass% or less, or 15.0 mass% or less. In addition, in the composition for a protective layer, the content of other (meth)acrylates based on a total amount of the (meth)acrylates may be 0 mass%, 0 mass% or more, more than 0 mass%, 1.0 mass% or more, 5.0 mass% or more or 10.0 mass% or more.

The composition for a protective layer contains, as a polymerizable compound, at least one or more (meth)acrylates, and may contain one or more types of other polymerizable compounds other than the (meth)acrylate in one aspect, and may contain, as a polymerizable compound, only a (meth)acrylate in another aspect. Other polymerizable compounds are not particularly limited, and one or more types of known polymerizable compounds can be used. In the composition for a protective layer, based on a total amount of 100 mass% of the polymerizable compounds, the content of the (meth)acrylate may be 80.0 mass% or more, 85.0 mass% or more, 90.0 mass% or more or 95.0 mass% or more, and a total amount of the polymerizable compounds may be an amount of the (meth)acrylate.

In one aspect, based on a total amount of 100 mass% of the composition, the content of the (meth)acrylates (a total content when the composition contains two or more types of (meth)acrylates) in the composition for a protective layer is preferably 80.0 mass% or more, more preferably 85.0 mass% or more, still more preferably 90.0 mass% or more, and yet more preferably 95.0 mass% or more. The composition for a protective layer may or may not contain a solvent. When the composition contains a solvent, any solvent in an arbitrary amount can be used as a usable solvent as long as it does not inhibit progress of the polymerization reaction of the polymerizable composition.

The composition for a protective layer may contain one or more types of various additives that can be added to the polymerizable composition in an arbitrary content. Examples of such additives include various known additives such as a polymerization initiator that allows a polymerization reaction to proceed, and a leveling agent for improving coating suitability of the composition.

For example, regarding the polymerization initiator, a known polymerization initiator that can function as a polymerization initiator for a (meth)acrylate can be used, and a radical polymerization initiator is preferable, and it is more preferable that only a radical polymerization initiator be contained as a polymerization initiator. In addition, regarding the polymerization initiator, a photopolymerization initiator or a thermal polymerization initiator can be used, and in order for a polymerization reaction to proceed in a short time, a photopolymerization initiator is preferable. For specific examples of photoradical polymerization initiators, the above description regarding the polymerization initiator that may be contained in the polymerizable composition for an optical article can be referred to. The content of the polymerization initiator may be, for example, in a range of 0.1 to 5.0 mass% based on a total amount of 100 mass% of the composition.

In addition, in one aspect, the composition for a protective layer may contain a UV absorbing agent. Regarding the UV absorbing agent, one or more types of various UV absorbing agents, for example, UV absorbing agents based on hydroxyphenyltriazine compounds such as 2,4-bis(2,4-dimethylphenyl)-6-(2-hydroxy-4-n-octyloxyphenyl)-s-triazine, 2,4,6-tris(2-hydroxy-4-hexyloxy-3-methylphenyl)-s-triazine, 2-[2-hydroxy-4-(2-ethylhexyloxy)phenyl]-4,6-dibiphenyl-s-triazine, and 2-[[2-hydroxy-4-[1-(2-ethylhexyloxycarbonyl)ethyloxy]phenyl]]-4,6-diphenyl-s-triazine, and based on benzotriazoles such as 2-(5-chloro-2H-benzotriazole-2-yl)-6-tert-butyl-4-methylphenol, and 2-(5-chloro-2-benzotriazolyl)-6-tert-butyl-p-cresol may be used. When the composition for a protective layer contains a UV absorbing agent, it can contribute to further improvement in weather resistance of the optical article having a protective layer formed from the composition. When the composition for a protective layer contains a UV absorbing agent, the content of the UV absorbing agent may be, for example, in a range of 0.1 to 1.0 mass%, based on a total amount of 100 mass% of the composition.

The composition for a protective layer can be prepared by simultaneously or sequentially mixing in the various components described above in any order.

When the composition for a protective layer is applied to a substrate and a curing treatment is performed on the applied composition, a protective layer which is a cured layer obtained by curing the composition for a protective layer can be formed on the photochromic layer. As the coating method, known coating methods such as a spin coating method and a dip coating method can be used, and a spin coating method is preferable in consideration of coating uniformity. The curing treatment may be light emission and/or heat treatment, and light emission is preferable in order for the curing reaction to proceed in a short time. Curing treatment conditions may be determined according to the types of various components contained in the composition for a protective layer, and the formulation of the composition for a protective layer. The protective layer can be directly provided on the surface of the photochromic layer or can be provided on the surface of a layer positioned on the photochromic layer. Examples of layers that can be positioned between the photochromic layer and the protective layer include a primer layer. The thickness of the protective layer is preferably 10 µm or more, more preferably 15 µm or more, still more preferably 20 µm or more, and yet more preferably 25 µm or more. In addition, the thickness of the protective layer is preferably 45 µm or less and more preferably 40 µm or less. The protective layer can contribute to improving the durability of the optical article. In addition, until an additional treatment (for example, formation of a cured layer to be described below) is performed, it is possible to protect the photochromic layer and prevent the photochromic layer from being scratched.

The optical article may have a layer configuration of "photochromic layer/protective layer". Regarding the layer configuration, "/" is used to indicate a form in which layers are in direct contact with each other with no other layers therebetween and a form in which layers are provided with one or more other layers therebetween. In addition, in one aspect, the optical article may have a layer configuration of "photochromic layer/protective layer/another cured layer. " In such a layer configuration, the other cured layer may be a cured layer that is generally called a hard coat layer. When the hard coat layer is provided in addition to the protective layer, it is possible to further improve the durability of the optical article. In addition, in one aspect, when the hard coat layer is provided, it is possible to improve the impact resistance of the optical article. In one aspect, the other cured layer can be in direct contact with the protective layer with no other layer therebetween.

The thickness of the other cured layer may be, for example, in a range of 1 to 10 µm, and preferably in a range of 1 to 8 µm, and more preferably in a range of 1 to 5 µm. In one aspect, the other cured layer may be thinner than the protective layer. As an example of the other cured layer, an organosilicon-based cured layer may be exemplified. The organosilicon-based cured layer is preferable because it has generally excellent impact resistance. In addition, for example, when an anti-reflective film is additionally provided, the organosilicon-based cured layer is preferable because it has generally excellent adhesion with respect to the anti-reflective film.

The organosilicon-based cured layer is a cured layer obtained by curing a polymerizable composition containing an organosilicon compound. Examples of organosilicon compounds include an organosilicon compound that can produce a silanol group when a polymerization treatment is performed and an organopolysiloxane having a reactive group such as a halogen atom or an amino group that undergoes a condensation reaction with a silanol group. In addition, examples of organosilicon compounds include a silane coupling agent having a polymerizable group such as a vinyl group, an allyl group, a (meth)acryloyl group, and a (meth)acryloyloxy group, and a hydrolyzable group such as an alkoxy group. The polymerizable composition containing an organosilicon compound may contain particles of an inorganic substance such as silicon oxide or titanium oxide in order to adjust the refractive index or the like. For details of the polymerizable composition containing an organosilicon compound, a known technique relating to an organosilicon-based cured layer that can function as a hard coat layer can be applied. Such a polymerizable composition can be cured when a polymerization reaction proceeds due to light emission and/or a heat treatment according to the type of the component contained in the composition.

When a wiping treatment is performed on the surface of the protective layer with a solvent before the other cured layer is provided on the protective layer, it is possible to improve the cleanliness of the surface of the protective layer to which a polymerizable composition for forming the other cured layer is applied. A wiping treatment is preferably performed with a solvent in this manner because it prevents a foreign substance from being interposed between the protective layer and the other cured layer. However, if the protective layer has poor solvent resistance, the protective layer may be damaged due to the wiping treatment with a solvent (for example, the occurrence of surface roughening). The occurrence of such damage causes fogging and optical defects in the optical article containing this protective layer. On the other hand, the protective layer formed from the composition for a protective layer having the composition described above can exhibit excellent solvent resistance.

The wiping treatment with a solvent can be performed by a known method. For example, the wiping treatment with a solvent can be performed by wiping the surface of the protective layer with a cloth soaked with the solvent. Examples of solvents include ketone solvents such as acetone and alcohol solvents such as ethanol and isopropyl alcohol. In one aspect, the protective layer preferably has high resistance with respect to a ketone solvent that is widely used as a solvent for wiping when an optical article is produced.

Regarding the layer configuration, the optical article may have a layer configuration of "substrate/(primer layer)/photochromic layer/(protective layer/another cured layer)". The layers in parentheses are layers that can be arbitrarily provided, and the reason why it is preferable to provide one or more of these layers is as described above.

One aspect of the optical article is a spectacle lens. In addition, as one aspect of the optical article, a goggles lens, a visor (cap) part of a sun visor, a shield member of a helmet, and the like may be exemplified. When the composition is applied to such a substrate for an optical article and a curing treatment is performed on the applied composition to form a photochromic layer, it is possible to obtain an optical article having an anti-glare function.

### [Eyeglasses]

One aspect of the present invention relates to eyeglasses including a spectacle lens, which is one aspect of the optical article. The details of the spectacle lens included in the eyeglasses are described above. When the eyeglasses include such a spectacle lens, for example, the photochromic compound contained in the photochromic layer develops a color when hit with sunlight outdoors and an anti-glare effect can be exhibited like sunglasses, and when returned to indoors, the photochromic compound can fade to restore transmission. Known techniques can be applied to the configuration of the frame and the like for the eyeglasses.

### [Examples]

Hereinafter, the present invention will be described in more detail with reference to examples. However, the present invention is not limited to the aspects shown in the examples.

### [Example 1]

### <Preparation of Polymerizable Composition for Optical Article (Coating Composition for Forming Photochromic Layer)>

In a plastic container, 90 parts by mass of polyethylene glycol dimethacrylate (in Formula 1, n=14, R represents an ethylene group, a molecular weight of 736) as the component A and 10 parts by mass of tricyclodecanedimethanol dimethacrylate (a molecular weight of 332) as the component B were mixed.

In the mixture of the polymerizable compounds obtained in this manner, a photochromic compound (indeno-fused naphthopyran compound represented by the structural formula described in U.S. Patent No. 5645767), a photoradical polymerization initiator (bis(2,4,6-trimethylbenzoyl)phenylphosphine oxide (Omnirad 819 commercially available from IGM Resin B. V.)), an antioxidant (ethylene bis(oxyethylene) bis-(3- (5-tert-butyl-4-hydroxy-m-tolyl)propionate)), and a light stabilizer (a mixture of bis(1,2,2,6,6-pentamethyl-4-piperidinyl)sebacate and methyl(1,2,2,6,6-pentamethyl-4-piperidinyl)sebacate) were mixed and sufficiently stirred. Then, defoaming was performed with a rotation/revolution type stirring defoaming device. Accordingly, a polymerizable composition for an optical article (coating composition for forming a photochromic layer) was prepared. The content of the above components based on a total amount of 100 mass% of the composition was 90.0 mass% for the mixture of the polymerizable compounds, 5.7 mass% for the photochromic compound, 0.7 mass% for the photoradical polymerization initiator, 2.7 mass% for the antioxidant, and 0.9 mass% for the light stabilizer.

### <Production of Spectacle Lens>

A plastic lens substrate (product name EYAS commercially available from HOYA; a central wall thickness of 2.5 mm, a radius of 75 mm, S-4.00) was immersed in a 10 mass% sodium hydroxide aqueous solution (a liquid temperature of 60°C) for 5 minutes and then washed with pure water and dried. Then, a primer layer was formed on a convex surface (object-side surface) of the plastic lens substrate. Specifically, a hydroxy group-containing bifunctional acrylate (10 parts by mass) having the following structure: 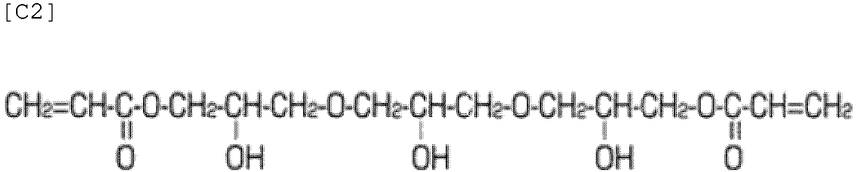 , Coronate 2715 (40 parts by mass, commercially available from Tosoh Corporation) as the polyisocyanate and 2-phenoxyethyl acrylate (viscosity: 13 cP) (50 parts by mass) were mixed. The mixture obtained in this manner was mixed with an amount of 0.02 mass% of the photoradical polymerization initiator (bis(2,4,6-trimethylbenzoyl)phenylphosphine oxide (Omnirad 819 commercially available from IGM Resin B. V.)) based on a total amount of 100 mass% of the mixture and sufficiently stirred. Then, defoaming was performed with a rotation/revolution type stirring defoaming device. The polymerizable composition for forming a primer layer obtained in this manner was applied to a convex surface of the plastic lens substrate in an environment of a temperature of 25°C and a relative humidity of 50% by a spin coating method, ultraviolet rays (a wavelength of 405 nm) were then emitted to the composition for forming a primer layer applied onto the plastic lens substrate in a nitrogen atmosphere (an oxygen concentration of 500 ppm or less), and the composition was cured to form a primer layer. The thickness of the formed primer layer was 8 µm.

The coating composition for forming a photochromic layer prepared above was applied onto the primer layer by a spin coating method. Spin coating was performed by the method described in Japanese Patent Application Publication No. 2005-218994. Then, ultraviolet rays (a wavelength of 405 nm) were emitted to the composition applied onto the primer layer in a nitrogen atmosphere (an oxygen concentration of 500 ppm or less), and the composition was cured to form a photochromic layer. The thickness of the formed photochromic layer was 45 µm.

The polymerizable composition for forming a protective layer prepared as follows was applied onto the photochromic layer by a spin coating method to form a coating layer. Ultraviolet rays (a wavelength of 405 nm) were emitted toward the surface of the coating layer in a nitrogen atmosphere (an oxygen concentration of 500 ppm or less), and the coating layer was cured to form a protective layer. The thickness of the formed protective layer was 15 µm.

The surface of the protective layer was wiped with acetone and then coated with the hard coating solution prepared as follows by a dip coating method (pulling speed of 20 cm/min). Then, heating and curing were performed in a heat treatment furnace at a temperature of 100°C inside the furnace for 60 minutes, and thus a hard coat layer (organosilicon-based cured layer) with a thickness of 3 µm was formed on the protective layer.

### (Preparation of Polymerizable Composition for Forming Protective Layer)

In a plastic container, 99.0 parts by mass of tricyclodecanedimethanol diacrylate (alicyclic bifunctional (meth)acrylate) and 1.0 part by mass of bis(2,4,6-trimethylbenzoyl)phenylphosphine oxide (Omnirad 819 commercially available from IGM Resin B.V.) were mixed and sufficiently stirred, and defoaming was then performed with a rotation/revolution type stirring defoaming device. Accordingly, a polymerizable composition for forming a protective layer was prepared.

In the polymerizable composition for forming a protective layer, since the (meth)acrylate was composed of only an alicyclic bifunctional (meth)acrylate, the content of the alicyclic bifunctional (meth)acrylate was 100 mass% based on a total amount of the (meth)acrylates.

### (Preparation of Hard Coating Solution (Polymerizable Composition for Forming Hard Coat Layer))

17 parts by mass of γ-glycidoxypropyltrimethoxysilane, 30 parts by mass of methanol, and 28 parts by mass of water-dispersed colloidal silica (a solid content of 40 mass%, and an average particle size of 15 nm) were put into a glass container including a magnetic stirrer, and sufficiently mixed, and the mixture was stirred at 5°C for 24 hours. Then, 15 parts by mass of propylene glycol monomethyl ether, 0.05 parts by mass of a silicone surfactant, and 1.5 parts by mass of aluminum acetylacetonate as a curing agent were added thereto and sufficiently stirred, and filtration was then performed to prepare a hard coating solution (polymerizable composition for forming a hard coat layer).

Accordingly, a spectacle lens including a substrate, a primer layer, a photochromic layer, a protective layer and a hard coat layer (organosilicon-based cured layer) in that order was obtained.

### [Example 2]

A polymerizable composition for an optical article (a coating composition for forming a photochromic layer) was prepared in the same manner as in Example 1 except that 80 parts by mass of polyethylene glycol dimethacrylate (in Formula 1, n=14, R represents an ethylene group, a molecular weight of 736) as the component A and 20 parts by mass of tricyclodecanedimethanol dimethacrylate (molecular weight of 332) as the component B were mixed.

A spectacle lens was obtained in the same manner as in Example 1 except that the polymerizable composition for an optical article prepared in this manner (coating composition for forming a photochromic layer) was used.

### [Comparative Example 1]

A polymerizable composition for an optical article (a coating composition for forming a photochromic layer) was prepared in the same manner as in Example 1 except that 10 parts by mass of 2-phenoxyethyl acrylate (monofunctional acrylate) was mixed in place of the component B.

A spectacle lens was obtained in the same manner as in Example 1 except that the polymerizable composition for an optical article prepared in this manner (coating composition for forming a photochromic layer) was used.

### [Comparative Example 2]

A polymerizable composition for an optical article (coating composition for forming a photochromic layer) was prepared in the same manner as in Example 2 except that 20 parts by mass of 1,9-nonane diol diacrylate (bifunctional acrylate with a linear structure) was mixed in place of the component B.

A spectacle lens was obtained in the same manner as in Example 1 except that a polymerizable composition for an optical article prepared in this manner (coating composition for forming a photochromic layer) was used.

### [Evaluation of Coloring Density]

The coloring density was evaluated by the following method according to JIS T7333: 2005.

Light was emitted to object-side surfaces of spectacle lenses of examples and comparative examples through an aerosol mass filter using a xenon lamp for 15 minutes (900 seconds), and the photochromic compound in the photochromic layer was caused to develop a color. The transmittance (measurement wavelength: 550 nm) during color development was measured with a spectrophotometer (commercially available from Otsuka Electronics Co., Ltd.). The light emission was performed so that irradiances and tolerances of irradiances specified in JIS T7333: 2005 were values shown in the following Table 1.

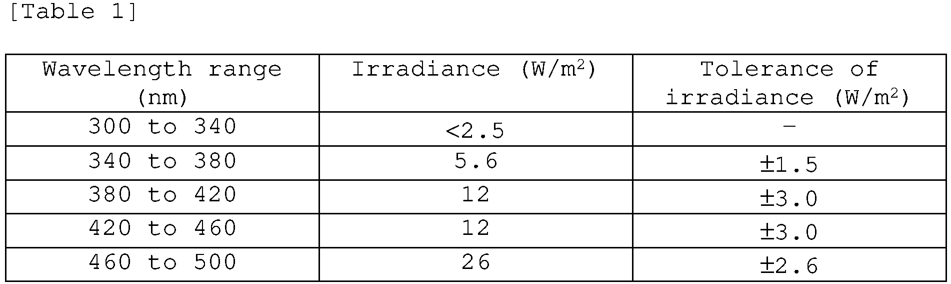

The smaller value of the transmittance measured above (hereinafter referred to as a "transmittance during color development") indicates a higher density in color development of the photochromic compound.

### [Evaluation of Solubility]

The polymerizable compositions for an optical article (coating composition for forming a photochromic layer) prepared in the examples and comparative examples were visually observed, and when no undissolved residues of the photochromic compound were observed, the solubility was evaluated as "A," and when undissolved residues were observed, the solubility was evaluated as "B."

The above results are shown in Table 2.

| [Table 2] | | |
|---|---|---|
| | Transmittance during color development (%) | Solubility |
| Example 1 | 18.61 | A |
| Example 2 | 17.90 | A |
| Comparative Example 1 | 19.93 | A |
| Comparative Example 2 | 17.61 | B |

Based on the results shown in Table 1, it was confirmed that, in a polymerizable composition for an optical article (coating composition for forming a photochromic layer) containing the component A and the component B together with a photochromic compound, the photochromic compound had excellent solubility and it was possible to form a photochromic layer having a high coloring density when a color was developed by receiving light.

### [Example 3]

A polymerizable composition for an optical article (a coating composition for forming a photochromic layer) was prepared in the same manner as in Example 1 except that 10 parts by mass of neopentyl glycol dimethacrylate (a molecular weight of 240) was mixed as the component B. When this composition was visually observed, no undissolved residues were observed.

A spectacle lens was obtained in the same manner as in Example 1 except that the polymerizable composition for an optical article prepared in this manner (coating composition for forming a photochromic layer) was used.

When the coloring density of the obtained spectacle lenses was evaluated in the same manner as above, a value of less than 19% of a transmittance during color development was obtained, and it was confirmed that the coloring density was high as in Examples 1 and 2.

### [Comparative Example 3]

A polymerizable composition for an optical article (a coating composition for forming a photochromic layer) was prepared in the same manner as in Example 1 except that 90 parts by mass of polyethylene glycol diacrylate (a molecular weight of 708) in place of the component A and 10 parts by mass of tricyclodecanedimethanol diacrylate (molecular weight of 304, acyclic acrylate) as the component B were mixed.

A spectacle lens was obtained in the same manner as in Example 1 except that the polymerizable composition for an optical article prepared in this manner (coating composition for forming a photochromic layer) was used.

### [Evaluation of Weather Resistance]

For the spectacle lens of Comparative Example 3, the transmittance during color development was determined in the same manner as above.

Then, in a QUV UV fluorescent tube type accelerated weathering tester (commercially available from Q-Lab), ultraviolet rays were emitted toward the object-side surface of the spectacle lens for 1 week under emission conditions of 0.2 w/m².

For the spectacle lens after UV emission, the transmittance during color development was determined in the same manner as above after the sample was temporarily left in the darkroom and the photochromic compound was faded. Weather resistance of the photochromic layer can be evaluated as being better when an increase in the transmittance during color development after UV emission with respect to that before UV emission is smaller. For Comparative Example 3, the value of "(transmittance during color development after UV emission)-(transmittance during color development before UV emission)" was 43.55%. On the other hand, when the spectacle lens of Example 1 was evaluated in the same manner, the value of "(transmittance during color development after UV emission)-(transmittance during color development before UV emission)" was 1.49%.

Comparing Example 1 and Comparative Example 3 described above, it was confirmed that the component A (acyclic methacrylate having a molecular weight of 500 or more) could contribute to improving the weather resistance of the photochromic layer.

### [Evaluation of Adhesion]

For Example 1 to Example 3, the adhesion was evaluated by a crosscut method on the object-side surface of the spectacle lens according to JIS K5600-5-6:1999. The evaluation result was the "number of remaining squares/total number of squares"="100/100," and it was confirmed that the spectacle lenses of Examples 1 to 3 had excellent adhesion between the photochromic layer and the adjacent layer (primer layer, protective layer).

### [Example 4]

A spectacle lens including a substrate, a primer layer, a photochromic layer, a protective layer and a hard coat layer in that order was produced in the same manner as in Example 1 except that, based on a total amount of 100 mass% of the composition, 0.3 mass% of a UV absorbing agent (hydroxyphenyltriazine-based UV absorbing agent, product name Tinubin479 (commercially available from BASF)) was added to a polymerizable composition for forming a protective layer.

The coloring density of the spectacle lens of Example 1 and the spectacle lens of Example 4 was evaluated by the method described above.

Then, in a QUV UV fluorescent tube type accelerated weathering tester (commercially available from Q-Lab), ultraviolet rays were emitted toward the object-side surface of the spectacle lens for 1 week under emission conditions of 0.2 w/m².

For the spectacle lens after UV emission, the transmittance during color development was determined in the same manner as above after the sample was temporarily left in the darkroom and the photochromic compound was faded. For the spectacle lens of Example 4, the value of "(transmittance during color development after UV emission)-(transmittance during color development before UV emission)" was 0.3%.

For the spectacle lens of Example 1 and the spectacle lens of Example 4, the YI value specified in JIS K 7373: 2006 was measured using a spectral transmittance measuring device DOT-3 (commercially available from Murakami Color Research Laboratory). The YI value is an index indicating the degree of coloring, and a smaller value indicates a smaller degree of coloring.

Then, in a QUV UV fluorescent tube type accelerated weathering tester (commercially available from Q-Lab), ultraviolet rays were emitted toward the object-side surface of the spectacle lens for 1 week under emission conditions of 0.2 w/m².

For the spectacle lens after UV emission, the YI value was determined in the same manner as above. Weather resistance can be evaluated as being better when an increase in the YI value after UV emission with respect to that before UV emission is smaller. The value of "(YI value after UV emission)-(YI value before UV emission)" calculated for the spectacle lens of Example 4 was smaller than the value calculated for the spectacle lens of Example 1 and was a value of about 1/2 of the value calculated for the spectacle lens of Example 1.

### [Reference Example: Examination on Primer Layer]

Hereinafter, the polymerizable composition for forming a primer layer prepared in Example 1 will be referred to as a "polymerizable composition for forming a primer layer A."

A polymerizable composition for forming a primer layer was prepared in the same manner as in the preparation of the polymerizable composition for forming a primer layer A except that a hydroxy group-containing bifunctional acrylate (27.5 parts by mass) having the structure shown above was used as a "polymerizable composition for forming a primer layer B," Coronate 2715 (25.0 parts by mass, commercially available from Tosoh Corporation) was used as the polyisocyanate, and propropylene glycol monomethyl ether acetate (27.5 parts by mass) was mixed without using 2-phenoxyethyl acrylate (viscosity: 13 cP).

Using the polymerizable compositions for forming a primer layer A and B, in the same manner for other conditions, a spectacle lens having a primer layer (a thickness of 8 µm) and a photochromic layer in that order on the substrate was produced. The produced spectacle lenses were observed under an optical microscope under emission of high-brightness light with a zircon lamp in the darkroom. A plurality of optical defects of about several tens of µm were confirmed in the spectacle lens having a primer layer formed using the polymerizable composition for forming a primer layer B, but such optical defects were not observed in the spectacle lens having a primer layer formed using the polymerizable composition for forming a primer layer A. That is, the spectacle lens having a primer layer formed using the polymerizable composition for forming a primer layer A had better optical homogeneity than the spectacle lens having a primer layer formed using the polymerizable composition for forming a primer layer B.

### [Reference Example: Examination on Protective Layer]

Hereinafter, the polymerizable composition for forming a protective layer prepared in Example 1 will be referred to as a "polymerizable composition for forming a protective layer A."

The polymerizable composition for forming a protective layer prepared by the following method will be referred to as a "polymerizable composition for forming a protective layer B."

In a plastic container, 86.7 parts by mass of tricyclodecanedimethanol diacrylate (alicyclic bifunctional (meth)acrylate), 4.3 parts by mass of pentaerythritol tetraacrylate, 8.7 parts by mass of isobornyl acrylate, and 0.3 parts by mass of bis(2,4,6-trimethylbenzoyl)phenylphosphine oxide (Omnirad 819 commercially available from IGM Resin B. V.) were mixed and sufficiently stirred, and defoaming was then performed with a rotation/revolution type stirring defoaming device. Accordingly, a polymerizable composition for forming a protective layer B was prepared. In the polymerizable composition for forming a protective layer B, the content of the alicyclic bifunctional (meth)acrylate based on a total amount of the (meth)acrylates was 87.0 mass%.

The polymerizable composition for forming a protective layer prepared by the following method will be referred to as a "polymerizable composition for forming a protective layer C."

In a plastic container, 68.0 parts by mass of tricyclodecanedimethanol dimethacrylate (alicyclic bifunctional (meth)acrylate), 20.0 parts by mass of neopentyl glycol dimethacrylate, 12.0 parts by mass of trimethylolpropane trimethacrylate and 0.3 parts by mass of bis(2,4,6-trimethylbenzoyl)phenylphosphine oxide (Omnirad 819 commercially available from IGM Resin B. V.) were mixed and sufficiently stirred, and defoaming was then performed with a rotation/revolution type stirring defoaming device. Accordingly, a polymerizable composition for forming a protective layer C was prepared. In the polymerizable composition for forming a protective layer C, the content of the alicyclic bifunctional (meth)acrylate based on a total amount of the (meth)acrylates was 68.0 mass%.

Using the polymerizable compositions for forming a protective layer A to C, in the same manner for other conditions, a spectacle lens having a primer layer, a photochromic layer and a protective layer (thickness of 15 µm) in that order on the substrate was produced. For each of the produced spectacle lenses, using an ultra-fine indentation hardness tester ENT-2100 (commercially available from Elionix Inc.), an indenter was pushed in by applying a load of 100 mgf to the surface of the protective layer. The surface area invaded by the indenter in this case was measured from the push depth, and the Martens hardness was determined as "load/surface area invaded by indenter. " Martens hardness is defined as a value obtained by dividing the load F by the surface area invaded by the indenter when a load F is applied and the indenter is pushed to a predetermined pushing amount h. This is a hardness measured when a test load is applied and is obtained from a value of the load-push depth curve when the load increases. The spectacle lens having a protective layer formed using the polymerizable composition for forming a protective layer A or B showed a Martens hardness of 1.5 to 2.0 times that of the spectacle lens having a protective layer formed using the polymerizable composition for forming a protective layer C. In addition, the surface of the protective layer of each of the produced spectacle lenses was wiped with a cloth soaked with acetone. When the surface of the protective layer after wiping was visually observed, and evaluated according to the following criteria, the evaluation result of the spectacle lens having a protective layer formed using the polymerizable composition for forming a protective layer A or B was "Good," and the evaluation result of the spectacle lens having a protective layer formed using the polymerizable composition for forming a protective layer C was "Damaged."
Good: no surface roughness
Damaged: surface roughness was observed

There is provided a polymerizable composition for an optical article including a photochromic compound, ≥ 50.0 mass%, based on a total amount of the (meth)acrylates contained in the composition, of an acyclic methacrylate (A) having a molecular weight of ≥ 500; and a bifunctional (meth)acrylate (B) selected from (i) alicyclic bifunctional (meth)acrylates and (ii) bifunctional (meth)acrylates containing one or more branch structures and containing no cyclic structure in the molecule.

With the polymerizable composition for an optical article, it is possible to form a photochromic layer having a high coloring density when a color is developed by receiving light and excellent weather resistance. In addition, the polymerizable composition for an optical article may be a composition in which a photochromic compound has excellent solubility.

Two or more of the various aspects and forms described in this specification may be combined in arbitrary combinations.

The embodiments disclosed herein are only examples in all respects and should not be considered as restrictive. The scope of the present invention is not limited to the above description, but is defined by the scope of claims, and is intended to encompass all modifications within the scope of the claims.

### [Industrial Applicability]

The present invention is beneficial in the technical fields of eyeglasses, goggles, sun visors, helmets and the like.

## Claims

1. A composition, which is a polymerizable composition for an optical article, comprising
(1) a photochromic compound,
(2) ≥ 50.0 mass%, based on a total amount of the (meth)acrylates contained in the composition, of an acyclic methacrylate (A) having a molecular weight of ≥ 500; and
(3) a bifunctional (meth)acrylate (B) selected from (i) alicyclic bifunctional (meth)acrylates and (ii) bifunctional (meth)acrylates containing one or more branch structures and containing no cyclic structure in the molecule.

2. The composition of claim 1, wherein (B) contains an alicyclic bifunctional (meth)acrylate.

3. The composition of claim 1 or 2, wherein (B) contains a bifunctional (meth)acrylate having a branch structure.

4. An optical article, comprising a substrate and a photochromic layer obtained by curing the composition of any of claims 1-3.

5. The optical article of claim 4, which includes the substrate, the photochromic layer, and a protective layer in that order.

6. The optical article of claim 5, wherein the protective layer contains a UV absorbing agent.

7. The optical article of claim 5 or 6, wherein the protective layer is a cured layer obtained by curing a polymerizable composition containing one or more (meth)acrylates and contains ≥ 70.0 mass% of an alicyclic bifunctional (meth)acrylate based on a total amount of the (meth)acrylates.

8. The optical article of any of claims 5-7, wherein the thickness of the protective layer is 10-45 µm.

9. The optical article of any of claims 5-8, which includes the substrate, the photochromic layer, the protective layer, and an organosilicon-based cured layer in that order.

10. The optical article of any of claims 4-9, further comprising a primer layer provided between the substrate and the photochromic layer.

11. The optical article of claim 10, wherein the primer layer is a cured layer obtained by curing a polymerizable composition containing a polyisocyanate, a hydroxy group-containing polymerizable compound, and a polymerizable compound having a viscosity of ≤ 100 cP and being selected from (meth)acrylates and vinyl ethers.

12. The optical article of any of claims 4-11, which is a spectacle lens, a goggles lens, a visor part of a sun visor or a shield member of a helmet.

13. Eyeglasses comprising the spectacle lens of claim 12.

## Patentansprüche

1. Zusammensetzung, die eine polymerisierbare Zusammensetzung für einen optischen Artikel ist, umfassend
(1) eine fotochrome Verbindung,
(2) ≥ 50,0 Masse-%, bezogen auf die Gesamtmenge von in der Zusammensetzung enthaltenen (Meth)acrylaten, eines acyclischen Methacrylats (A) mit einem Molekulargewicht von ≥ 500; und
(3) ein bifunktionelles (Meth)acrylat (B), ausgewählt aus (i) alicyclischen bifunktionellen (Meth)acrylaten und (ii) bifunktionellen (Meth)acrylaten, die eine oder mehr Verzweigungsstrukturen enthalten und keine cyclische Strukturen in dem Molekül enthalten.

2. Zusammensetzung gemäß Anspruch 1, worin (B) ein alicyclisches bifunktionelles (Meth)acrylat enthält.

3. Zusammensetzung gemäß Anspruch 1 oder 2, worin (B) ein bifunktionelles (Meth)acrylat mit einer Verzweigungsstruktur enthält.

4. Optischer Artikel, umfassend ein Substrat und eine fotochrome Schicht, erhalten durch Härten der Zusammensetzung gemäß irgendeinem der Ansprüche 1-3.

5. Optischer Artikel gemäß Anspruch 4, der in dieser Reihenfolge ein Substrat, die fotochrome Schicht und eine Schutzschicht umfasst.

6. Optischer Artikel gemäß Anspruch 5, worin die Schutzschicht einen UV-Absorber enthält.

7. Optischer Artikel gemäß Anspruch 5 oder 6, worin die Schutzschicht eine gehärtete Schicht ist, erhalten durch Härten einer polymerisierbaren Zusammensetzung, die ein oder mehr (Meth)acrylate enthält und ≥ 70,0 Masse-% eines alicyclischen bifunktionellen (Meth)acrylats enthält, bezogen auf die Gesamtmenge der (Meth)acrylate.

8. Optischer Artikel gemäß irgendeinem der Ansprüche 5-7, worin die Dicke der Schutzschicht 10-45 µm beträgt.

9. Optischer Artikel gemäß irgendeinem der Ansprüche 5-8, der in dieser Reihenfolge das Substrat, die fotochrome Schicht, die Schutzschicht und eine auf Organosiliciumbasierende gehärtete Schicht umfasst.

10. Optischer Artikel gemäß irgendeinem der Ansprüche 4-9, ferner umfassend eine Grundierungsschicht, die zwischen dem Substrat und der fotochromen Schicht vorgesehen ist.

11. Optischer Artikel gemäß Anspruch 10, worin die Grundierungsschicht eine gehärtete Schicht ist, erhalten durch Härten einer polymerisierbaren Zusammensetzung, die ein Polyisocyanat, eine Hydroxygruppe-haltige polymerisierbare Verbindung und eine polymerisierbare Verbindung, die eine Viskosität von ≤ 100 cP aufweist und ausgewählt ist aus (Meth)acrylaten und Vinylethern, umfasst.

12. Optischer Artikel gemäß irgendeinem der Ansprüche 4-11, welches ein Brillenglas, ein Sonnenbrillenglas, ein Visor-Teil eines Sonnen-Visors oder ein Visier eines Helms ist.

13. Brille, umfassend das Brillenglas gemäß Anspruch 12.

## Revendications

1. Composition, qui est une composition polymérisable pour un article optique, comprenant
(1) un composé photochromique,
(2) ≥ 50,0 % en masse, par rapport à la quantité totale des (méth)acrylates contenus dans la composition, d'un méthacrylate acyclique (A) présentant une masse moléculaire ≥ 500 ; et
(3) un (méth)acrylate bifonctionnel (B) sélectionné parmi (i) des (méth)acrylates bifonctionnels alicycliques et (ii) des (méth)acrylates bifonctionnels contenant une ou plusieurs structures ramifiées et ne contenant aucune structure cyclique dans la molécule.

2. Composition selon la revendication 1, dans laquelle (B) contient un (méth)acrylate bifonctionnel alicyclique.

3. Composition selon la revendication 1 ou la revendication 2, dans laquelle (B) contient un (méth)acrylate bifonctionnel présentant une structure ramifiée.

4. Article optique, comprenant un substrat et une couche photochromique obtenue par durcissement de la composition selon l'une quelconque des revendications 1 à 3.

5. Article optique selon la revendication 4, qui inclut le substrat, la couche photochromique et une couche de protection, dans cet ordre.

6. Article optique selon la revendication 5, dans lequel la couche de protection contient un agent absorbeur d'UV.

7. Article optique selon la revendication 5 ou la revendication 6, dans lequel la couche de protection est une couche durcie obtenue par durcissement d'une composition polymérisable contenant un ou plusieurs (méth)acrylates et contient ≥ 70,0 % en masse d'un (méth)acrylate bifonctionnel alicyclique sur la base de la quantité totale des (méth)acrylates.

8. Article optique selon l'une quelconque des revendications 5 à 7, dans lequel l'épaisseur de la couche de protection est de 10 à 45 µm.

9. Article optique selon l'une quelconque des revendications 5 à 8, qui inclut le substrat, la couche photochromique, la couche de protection et une couche durcie à base d'organosiloxane, dans cet ordre.

10. Article optique selon l'une quelconque des revendications 4 à 9, comprenant en outre une couche d'apprêt disposée entre le substrat et la couche photochromique.

11. Article optique selon la revendication 10, dans lequel la couche d'apprêt est une couche durcie obtenue par durcissement d'une composition polymérisable contenant un polyisocyanate, un composé polymérisable contenant un groupe hydroxy, et un composé polymérisable présentant une viscosité ≤ 100 cP et étant sélectionné parmi des (méth)acrylates et des éthers vinyliques.

12. Article optique selon l'une quelconque des revendications 4 à 11, qui est un verre de lunettes, un verre de lunettes de protection, un élément écran d'un pare-soleil ou un élément écran de casque.

13. Lunettes comprenant le verre de lunettes selon la revendication 12.
